# EUROPÄISCHE PATENTANMELDUNG

(11) **EP 3 786 365 A1**
(43) Veröffentlichungstag der Anmeldung: **03.03.2021**
(21) Anmeldenummer: 20191532.9
(22) Anmeldetag: 18.08.2020
(51) Int. Cl.: E01H 3/00, B01D 53/60

(54) **VERFAHREN UND MITTEL ZUR REINIGUNG VON STADTLUFT IM STRASSENBEREICH**

(30) Priorität: 27.08.2019 DE 102019006032; 05.12.2019 DE 102019008467
(71) Anmelder: Ed. Züblin AG, 70567 Stuttgart (DE)
(72) Erfinder: Brosig, Stefan, 70563 Stuttgart (DE)
(74) Vertreter: dompatent von Kreisler Selting Werner - Partnerschaft von Patent- und Rechtsanwälten mbB

(57) **Zusammenfassung**

Es wird ein Verfahren und ein Mittel für die Durchführung des Verfahrens angegeben, mit dem saure Luftbestandteile und optional auch Feinstaub aus der Stadtluft im Bereich von Straßen entfernt werden. Dies geschieht durch großflächiges Auftragen eines chemisch reagierenden Absorbens für saure Gase auf die Straßenoberfläche, in Zeiten, wenn Bedarf für eine Reinigung der Stadtluft besteht.

Das Absorbens, das auch eine Mischung verschiedener Substanzen mit optionalen Hilfsstoffen sein kann, stammt vorzugsweise aus der Gruppe der gesundheitlich unbedenklichen Alkalicarbonate, Alkalihydrogencarbonate, Erdalkalicarbonate, Erdalkalihydrogencarbonate.

Das Absorbens wird vorzugsweise in wässriger Lösung aufgebracht. Im Falle eines hygroskopischen Absorbens oder Hilfsstoffes oder schwer verdampfenden flüssigen Zusatzes bindet das Mittel auch Feinstaub.

## Beschreibung

### Technisches Gebiet

Die Erfindung betrifft die Reduzierung von Schadstoffen in abgasbelasteter und feinstaubbelasteter Stadtluft, vorzugsweise direkt im Bereich der Straßen.

### Hintergrund der Erfindung

Es sind Filterlösungen zur Beseitigung von Stickoxiden oder/und Feinstaub bekannt, die auf der Basis von Aktivkohle als physikalisch agierendem Adsorbens arbeiten.

Zur Entfernung von Stickoxiden wird auch gekörntes Titandioxid als Photokatalysator auf eine Fahrbahn festhaftend aufgebracht, das die Stickoxide im Endeffekt photochemisch nach Reaktion mit etwas Feuchtigkeit und Sauerstoff in die sehr starke Salpetersäure überführt, die z.B. mit Kalkstaub zu Calciumnitrat weiterreagiert, als Gas verdampft oder durch Regenwasser weggewaschen wird. In manchen Filtereinrichtungen werden Katalysatoren zur Umwandlung von Stickoxiden eingesetzt (z.B. von air2public). Auch Mooswände entlang von Straßen werden zur Schadstoffreduktion eingesetzt.

Gegen die unter anderem durch den Straßen-, Reifen- und Bremsscheibenabrieb auftretende Feinstaubbelastung hat es sich als effektiv erwiesen, die Straßen mit einem Wasserwagen zu sprengen, bevorzugt mehrmals am Tag.

Zur Entfernung von in relativ hohen Konzentrationen auftretenden sauren Gasen aus heißem Rauchgas, ist die Verwendung fester Carbonate und Hydrogencarbonate bei hoher Temperatur bekannt (siehe z.B. Diplomarbeit von 2012 "Industriell eingesetzte Verfahren zur Abscheidung saurer Schadstoffe aus den Rauchgasen von Abfallverbrennungsanlagen" von Robert Wesseley, Technische Universität Graz).

In der EP 3434985 A1 wird eine komplizierte Vorrichtung angegeben, mit der mit Hilfe unterschiedlicher Verbindungen, darunter Kaliumhydroxid oder/und Natriumhydroxid als Feststoffe, Luftschadstoffe, darunter NOₓ, entfernt werden. Natrium- und Kaliumhydroxid werden zur Bindung von Kohlenoxiden verwendet, nicht zur Bindung von Stickoxiden.

Die bislang angewandten Lösungen sind teuer, wartungsaufwendig oder wenig effektiv, oder sie beseitigen nur ein Teilproblem der Schadstoffbelastung. Salpetersäure, die nicht in ein Nitrat umgewandelt wird, ist ebenfalls kein gesunder Luftbestandteil.

Von der Stadt Wien wird Kaliumcarbonat seit 1989 in großen Mengen (mehrere tausend Tonnen jährlich) als ökologisch wenig bedenklicher Streusalzersatz ausgebracht, entweder als Lösung oder auch in Blähton (siehe z.B. in "Studie über die Auftauwirkung stickstoffhaltiger Auftaumittel" von Martin Wresowar und Monika Sieghardt, 2000; außerdem im Bericht "Verminderung der Staubbelastung bei der Reinigung der Straßen von Streusplitt", von Prof. Dr. H. P. Lenz, TU Wien, und Dipl.-Ing. R. Rosenitsch, 2003; auch im Forschungsbericht "Optimierung der Feuchtsalzstreuung", TU Wien, Dezember 2011).

Von der Fa. Rudolf Klaghofer GmbH wird mit Kaliumcarbonat ummantelter Blähton als umweltfreundliches Winterstreumittel verwendet, bei dem der Blähton griffigkeitserhöhend wirkt.

In der DE 102019004175 A1 (veröffentlicht am 11. September 2019) werden in einer Variante Alkalicarbonate oder Alkalihydrogencarbonate in eine neben der Straße befindliche Kassette gesprüht, durch die Luft aus dem Straßenbereich angesaugt wird.

Die WO 2019/192826 A1 (veröffentlicht am 10. Oktober 2019) von IFP Energies Nouvelles beschreibt ein Verfahren zur Reinigung von Stadtluft durch Auswaschung derselben in geschlossenen Luftwaschvorrichtungen, also "Luftwaschkammern", durch die die verunreinigte Luft geblasen oder gesaugt wird und gleichzeitig mit einer wässrigen Waschlösung in Kontakt kommt, die mindestens ein Mittel enthält, welches mit mindestens einem Schadstoff reagiert. Die Waschlösung wird entweder in diese Luft nässend versprüht oder streicht in den Kammern über große Flächen, die mit der Waschlösung benetzt sind. Das in der WO 2019/192826 A1 beschriebene Verfahren ist ungleich aufwendiger als das Verfahren gemäß der in dieser Anmeldung beschriebenen Erfindung, denn es erfordert größere bauliche Maßnahmen, die ohne lange Straßensperrung nicht realisierbar sind.

Obwohl das Problem der Reinigung der Stadtluft schon seit geraumer Zeit "auf den Nägeln brennt" und die Wirtschaftskraft einer der Hauptindustrien Deutschlands (Automobilindustrie und Zuliefererindustrie) in ihrem Bestand gefährdet, wurde trotz zigtausender Entwicklungsingenieure kein wirklich einfaches und gangbares Verfahren gefunden, das Problem schnell und ohne ungeliebte Verbote durch die Politik zu lösen.

Es besteht also mit hoher Dringlichkeit Bedarf an einer schnellen, wirksamen, ungefährlichen und günstigen Lösung des Problems.

### Aufgabe der Erfindung

Aufgabe der Erfindung ist es daher, ein Verfahren und ein Mittel für dieses Verfahren anzugeben, das kostengünstig, effektiv und ungefährlich im Straßenbereich eine Vielzahl an Schadstoffen in der Stadtluft reduziert. Vor allem Stickoxide, besonders Stickstoffdioxid, und Schwefeloxide, insbesondere Schwefeldioxid, sind hier zu nennen sowie, darüber hinaus Feinstaub. Aber auch Pflanzenpollen sind hier zu nennen, deren allergisches Potential durch Luftschadstoffe, wie Rußpartikel, vervielfacht wird.

"Effektiv" bedeutet hierbei, dass die gesetzlichen Luftgrenzwerte durch das Verfahren unterschritten werden.

### Begriffserklärungen und -definitionen

"Unschädlich" im Sinne der Erfindung bedeutet: dem menschlichen Körper und der Umwelt in der verabreichten Menge nicht schadend. *"Alle Ding' sind Gift und nichts ohn' Gift; allein die Dosis macht, das ein Ding' kein Gift ist. "* (Paracelsus). Seifenlauge auf der Haut kann einen pH-Wert von bis zu 12 aufweisen. Demnach sind Lösungen mit einem pH-Wert von bis zu 12 bei Hautkontakt nicht schädlich. "Absolut unschädlich" im Sinne der Erfindung sind Stoffe, die als Lebensmittel verwendbar sind oder wären, weil ihre Bestandteile in den angewendeten Konzentrationen Mengen auch in Lebensmitteln vorhanden sind.

"Schadstoffe" im Sinne der Erfindung sind Stoffe, die vom Gesetzgeber in den vorliegenden Konzentrationen in der Stadtluft als gesundheitsschädlich angesehen werden. Die Einschätzung dessen, was ein Schadstoff ist, ist von der Gesetzeslage und dem aktuellen Wissensstand abhängig. Die Schadstoffe, die zurzeit die größte Bedeutung in der Stadtluft haben, sind Stickoxide und Feinstaub. Schwefeloxide haben durch die Entschwefelung des Treibstoffes schon seit einiger Zeit kaum noch Bedeutung, doch Erkenntnisse und Verhältnisse können sich erfahrungsgemäß auch ändern.

"Reinigung" der Stadtluft bedeutet, dass die Konzentration (Mikrogramm pro Kubikmeter) der in der Stadtluft vorhandenen sauren luftverunreinigenden Bestandteilen, die ausgewählt sind aus der Gruppe bestehend aus Stickstoffdioxid oder/und Stickstoffmonoxid oder/und Schwefeldioxid oder/und Schwefeltrioxid nach Anwendung des erfindungsgemäßen Verfahrens bzw. Mittels reduziert ist, vorzugsweise um wenigstens 5 %, wenigstens 10 %, wenigstens 15 %, wenigstens 20 %, wenigstens 25 %, wenigstens 30 %.

"Saure Gase" sind ganz allgemein Gase, die mit Wasser zu einer Lösung reagieren, die einen pH-Wert von kleiner als 7 aufweist. Das Kohlendioxid der Luft ist daher ebenfalls ein saures Gas. Erfindungsgemäß werden im Text mit sauren Gasen solche Gase bezeichnet, die in Wasser gelöst einen pKₛ-Wert aufweisen, der kleiner ist als der der Kohlensäure, also kleiner als 6,5.

Das sehr gut wasserlösliche Stickstoffdioxid ist von seiner Formel her das gemischte Anhydrid aus Salpetersäure (pKₛ = -1,4) und salpetriger Säure (pKₛ = 3,3), also einer sehr starken und einer mittelstarken Säure. Das sehr schlecht wasserlösliche Stickstoffmonoxid ist formelgemäß das Anhydrid der salpetrigen Säure (pKₛ = 3,3) und der hyposalpetrigen Säure (pKₛ = 7,2), also aus einer mittelstarken Säure und einer schwachen Säure. In Lösung dominiert immer die stärkere Säure den pH-Wert. Es findet aber durch Sauerstoff bzw. seine Modifikation Ozon eine Umwandlung des eigentlich relativ unschädlichen Stickstoffmonoxids (ein natürlicher Bestandteil im Stoffwechsel des menschlichen Körpers) in das eigentlich schädliche Reizgas Stickstoffdioxid statt. Schwefeldioxid ist das Anhydrid der mittelstarken schwefligen Säure (pKₛ = 1,8), Schwefeltrioxid das Anhydrid der starken Schwefelsäure (pKₛ = -3).

"Großflächig" bedeutet, dass von der Straßenoberfläche 2 % oder mehr, 10 % oder mehr, 30 % oder mehr, 40 % oder mehr, 50 % oder mehr, 60 % oder mehr mit Absorbens bedeckt sind.

In diesem Text werden verschiedentlich Synonyme verwendet, deren Bedeutung sich aus dem Zusammenhang ergibt.

In diesem Text wird zwar von Stadtluft gesprochen, weil diese wegen der hohen Bebauung seitlich der Straßen und die dadurch verminderte Konvektion besonders stark mit Schadstoffen belastet sein kann, es kann sich aber dabei auch um die Luft in Dörfern oder über Straßen ohne hohe seitliche Bebauung handeln, wenn dort Luftgrenzwerte überschritten werden.

### Kurzbeschreibung der Erfindung

Erfindungsgemäß wurde die Aufgabe wie nachfolgend beschrieben gelöst:
1. Verfahren zur Reinigung von Stadtluft im Bereich einer Straße, dadurch gekennzeichnet, dass auf die Straßenoberfläche großflächig ein Absorbens aufgebracht wird, das mit den vorhandenen sauren luftverunreinigenden Bestandteilen aus der Gruppe Stickstoffdioxid oder/und Stickstoffmonoxid oder/und Schwefeldioxid oder/und Schwefeltrioxid chemisch reagiert und diese in unschädlichere Verbindungen überführt. Das Absorbens kann in fester Form, in Lösung oder als Suspension vorliegen.
2. Verfahren zur Reinigung von Stadtluft im Bereich einer Straße gemäß 1., dadurch gekennzeichnet, dass das Absorbens in wässriger Lösung aufgebracht wird.
3. Verfahren zur Reinigung von Stadtluft im Bereich einer Straße gemäß 1. oder 2., dadurch gekennzeichnet, dass das Absorbens hygroskopisch ist, wobei das Absorbens vorzugsweise auch Feinstaub bindet und/oder diesen auf der Straßenoberfläche festhält.
4. Verfahren zur Reinigung von Stadtluft im Bereich einer Straße gemäß 1. bis 3., dadurch gekennzeichnet, dass das Absorbens ausgewählt ist aus der Gruppe bestehend aus Alkalicarbonaten oder/und Alkalihydrogencarbonaten oder/und Alkalioxiden oder/und Alkalihydroxiden oder/und Erdalkalicarbonaten oder/und Erdalkalihydrogencarbonaten oder/und Erdalkalioxiden oder/und Erdalkalihydroxiden, wobei das Absorbens vorzugsweise in wässriger Lösung oder als körniger oder pulverförmiger Feststoff vorliegt und großflächig auf die Straßenfläche aufgebracht wird.
5. Verfahren zur Reinigung von Stadtluft im Bereich einer Straße gemäß 1. bis 4., dadurch gekennzeichnet, dass (bei anfallender Belastung durch saure Luftschadstoffe) pro Tag und pro Quadratmeter Straßenfläche mehr als 0,001 Mol in Carbonaten oder/und Hydrogencarbonaten oder/und Oxiden oder/und Hydroxiden gebundene negative Ladung aufgebracht wird, vorzugsweise zwischen 0,002 und 0,5 Mol, noch bevorzugter zwischen 0,005 Mol und 0,1 Mol, besonders bevorzugt zwischen 0,005 Mol und 0,05 Mol.
6. Mittel zur Reinigung von Stadtluft im Straßenbereich, die mit Stickoxiden oder/und Schwefeloxiden verunreinigt ist, von wenigstens Teilen dieser Stickoxide oder/und Schwefeloxide, dadurch gekennzeichnet, dass es als Absorbens in fester, (in Wasser) gelöster oder (in Wasser) suspendierter Form Alkalicarbonate oder/und Alkalihydrogencarbonate oder/und Alkalioxide oder/und Alkalihydroxide oder/und Erdalkalicarbonate oder/und Erdalkalihydrogencarbonate oder/und Erdalkalioxide oder/und Erdalkalihydroxide enthält.
7. Mittel gemäß 6., dadurch gekennzeichnet, dass es hygroskopische Carbonate oder/und Hydrogencarbonate oder/und andere hygroskopische Verbindungen, insbesondere Calciumchlorid oder Magnesiumchlorid oder/und ein nicht bei Umgebungstemperatur verdampfendes Lösungsmittel, insbesondere Glykol oder Glycerin enthält.
8. Mittel gemäß 6. oder 7., dadurch gekennzeichnet, dass es zusätzlich ein im Winterdienst eingesetztes Auftaumittel für Eis, insbesondere Natriumchlorid oder Calciummagnesiumacetat oder Natriumacetat, enthält.
9. Mittel gemäß 6. bis 8., dadurch gekennzeichnet, dass es zum Zwecke der Aufbringung auf die Straßenfläche als Lösung oder Suspension vorliegt, vorzugsweise als wässrige Lösung oder wässrige Suspension.
10. Mittel gemäß 6. bis 9., dadurch gekennzeichnet, dass es zusätzlich ein mechanisches Streumittel, insbesondere Streusplitt oder Blähton enthält. Die Griffigkeit der Straßenoberfläche wird dadurch erhöht.
11. Verwendung von Alkalicarbonaten oder/und Alkalihydrogencarbonaten oder/und Alkalioxiden oder/und Alkalihydroxiden oder/und Erdalkalicarbonaten oder/und Erdalkalihydrogencarbonaten oder/und Erdalkalioxiden oder/und Erdalkalihydroxiden auf der Straßenoberfläche zur Reinigung von Stadtluft von Stickoxiden oder/und Schwefeloxiden.
12. Verwendung gemäß 11., dadurch gekennzeichnet, dass handelsübliches Kaliumcarbonat-haltiges oder/und Kaliumhydrogencarbonat-haltiges Winterstreumittel verwendet wird. Dies bedeutet dass nicht nur im Winter, sondern auch zu anderen Jahreszeiten ein solches Winterstreumittel verwendet wird.
13. Verwendung gemäß 11. oder 12., dadurch gekennzeichnet, dass die Anwendung in folgender Menge pro Tag und pro Quadratmeter Straßenfläche erfolgt:
   - mehr als 0,001 Mol in Carbonaten oder/und Hydrogencarbonaten oder/und Oxiden oder/und Hydroxiden gebundener negativer Ladung,
   - vorzugsweise zwischen 0,002 und 0,5 Mol,
   - noch bevorzugter zwischen 0,005 Mol und 0,1 Mol,
   - besonders bevorzugt zwischen 0,005 Mol und 0,05 Mol.
14. Verwendung gemäß 11. bis 13., dadurch gekennzeichnet, dass das Mittel auch im Winterdienst gegen Glatteis und Schnee verwendet wird.
15. Verwendung gemäß 11. bis 14., dadurch gekennzeichnet, dass das Mittel zusammen mit hygroskopischen anderen Substanzen oder/und mit schwerer als Wasser flüchtigen Lösungsmitteln, insbesondere Glycerin oder Glykol, verwendet wird. Diese halten die Straßenoberfläche feucht und binden Staub binden und/oder halten diesen fest.

Zusammenfassend betrifft die Erfindung die Verwendung von Alkali- /Erdalkalicarbonaten, Alkali- /Erdalkalihydrogencarbonaten ausgewählt aus der Gruppe bestehend aus Natriumcarbonat, Kaliumcarbonat, Natriumhydrogencarbonat, Kaliumhydrogencarbonat oder Gemischen davon, zur Reduktion der Konzentration von Stickoxiden und/oder Schwefeloxiden in Stadtluft. Die Auftragung des Absorbens erfolgt nur, wenn tatsächlich Bedarf besteht, insbesondere wenn gesetzlich definierte oder anderweitig festgelegte Grenzwerte der genannten Verunreinigungen überschritten werden oder Gefahr besteht, dass diese überschritten werden könnten.

### Beschreibung der Erfindung

Die Erfindung sieht hierzu vor, im Falle erhöhter Schadstoffwerte in der Luft (das heißt, wenn die aktuellen gesetzlichen Grenzwerte überschritten sind oder die Gefahr der Überschreitung besteht) auf der Straßenfläche großflächig ein chemisches Mittel aufzubringen, das eine oder mehrere chemische Substanzen umfasst, die in einer chemischen Reaktion mit den sauren Luftbestandteilen Stickoxiden und Schwefeloxiden (vor allem ist dies Stickstoffdioxid, seltener auch Schwefeldioxid) reagiert und diese in nicht flüchtige Salze überführt. Der derzeitige Jahresgrenzwert in Deutschland für den Schadstoff Stickstoffdioxid (NO₂) zum Schutz der menschlichen Gesundheit beträgt 40 Mikrogramm pro Kubikmeter Luft. Der Stunden-Grenzwert dieses Schadstoffes gemittelt über 1 Stunde darf nicht öfter als 18 mal im Kalenderjahr den Wert von 200 Mikrogramm pro Kubikmeter überschreiten.

Diese Aufbringung kann routinemäßig täglich oder mehrmals täglich erfolgen, oder nur dann, wenn aufgrund der Witterung mit erhöhten Werten zu rechnen ist. Dies bringt Kostenvorteile. (Windstille begünstigt höhere Schadstoffkonzentrationen. Ebenso begünstigt Kälte höhere Stickoxidkonzentrationen, weil die Abgasreinigung von Stickoxiden bei den meisten PKWs bei Temperaturen unter zehn Grad nicht ausreichend funktioniert. Laut den Autoherstellern sei das Abschalten nötig, um die Bauteile zu schützen.)

Das Mittel kann fest oder in flüssiger Form als Lösung aufgebracht werden. Bevorzugt ist die Aufbringung in flüssiger Form, vorzugsweise als Lösung (Hauptbestandteil Wasser).

Bevorzugt ist diese Lösung hygroskopisch, so dass sie von selbst auf der Straßenoberfläche feucht bleibt und dort haftet und dann auch Feinstaub bindet bzw. das Ablösen desselben von der Straßenoberfläche behindert.

Überraschenderweise hat es sich gezeigt, dass es durch erfindungsgemäße Maßnahmen möglich ist, die erhöhten Schadstoffgehalte in der Stadtluft unter die gesetzlichen Grenzwerte zu drücken, ohne dass Verbote oder aufwendige und teure andere Methoden notwendig sind.

Die Wirksamkeit der Methode lässt sich quantifizieren, indem nach einiger Zeit, z.B. am Ende des Tages, Substanz (Material) von der Straßenoberfläche aufgenommen und auf relative Anteile von Nitrat/ Nitrit (umgesetzter Substanz) und unverbrauchter Substanz (Carbonat, Hydrogencarbonat) analysiert wird.

Das Mittel ist für im Automobilbau eingesetzte Metalle nicht korrosiv, sondern durch die säurebindende Wirkung (Puffersubstanz mit pH ungefähr 7 oder höher) sogar eher antikorrosiv, so dass Metall (insbesondere Stahl) nicht angegriffen, sondern sogar eher geschützt wird. (Sogar sauberes Regenwasser ist leicht sauer.) Der Pufferbereich von Säure-/Base-Systemen wird ungefähr von der "Puffergleichung", der Henderson-Hasselbalch-Gleichung, beschrieben. Den Pufferbereich kann man aus dem "Hägg-Diagramm der Kohlensäure" ablesen, das im Internet leicht abrufbar ist.

Ein Aufbringen als Lösung ermöglicht ein gleichmäßigeres Auftragen und eine bessere Haftung an der Straßenoberfläche als ein Aufbringen als Feststoff, was aber natürlich prinzipiell auch möglich ist. Die Korngröße der Aufbringung ist unkritisch, da zu große Körner von den Kraftfahrzeugen zerfahren und zerkleinert werden. Die Aufbringung kann also auch mit der gleichen Korngröße, wie im Winterstreudienst erfolgen (d.h. meistens etwa 1 bis 10 Millimeter).

Das Mittel bzw. die Lösung und die aus ihr entstehenden Produkte sind bevorzugt zumindest weniger korrosiv bzw. korrosionsvermittelnd als Natriumchlorid oder Natriumchloridlösung, wie sie im Winter nach einem Streuvorgang als Glatteisschutz auf Straßen vorhanden ist, das sind bis zu 40 Gramm Natriumchlorid pro Quadratmeter.

Bei dem Mittel, das zur Schadstoffreinigung auf die Straße aufgebracht wird, handelt es sich um Alkali- oder Erdalkalicarbonate oder Alkali- oder Erdalkalihydrogencarbonate oder eine Mischung derselben (mit oder ohne weitere Hilfssubstanzen), wobei es sich bei dem Mittel vorzugsweise um eine wässrige Lösung derselben handelt. Unlösliche Carbonate, wie z.B. Calciumcarbonat, haben eine geringere Reaktionsfähigkeit als wasserlösliche Carbonate, weil die aktive Oberfläche der darin enthaltenen reaktiven Ionen geringer ist. Calciumhydrogencarbonat ist darüber hinaus verglichen mit den Alkaliverbindungen nur gering wasserlöslich (ungefähr 16 Gramm pro Liter bei 20 °C). Die Anwendung und Bereitung der Lösungen ist aufwendiger als von Lösungen der leicht löslichen Alkaliverbindungen.

Besonders bevorzugt sind daher Alkalicarbonate oder/und Alkalihydrogencarbonate und von diesen ganz besonders die teilweise sogar als Lebensmittelzusätze zugelassenen Kalium- und Natriumverbindungen.

Bevorzugt sollte die eingesetzte, die Schadstoffe aus den Abgasen entfernende Substanz zwar nicht mehr schnell mit dem Kohlendioxid der Luft reagieren, wie es z.B. Alkalilaugen oder Kalkwasser (Calciumhydroxidlösung, aus der Kalk ausfällt) tun. Trotzdem ist es erfindungsgemäß auch möglich, prinzipiell auch Alkalimetall- und Erdalkalimetallhydroxide (z.B. NaOH, KOH, Mg(OH)₂, Ca(OH)₂) allein oder als zusätzliche Substanz in dem erfindungsgemäßen Mittel zu verwenden. Entscheidend ist dabei vor allem die Summe der Molaritäten der Anionen dieser Verbindungen, worauf später noch näher eingegangen wird. (Auch andere wasserlösliche Metallhydroxide und -oxide, die mit NO und NO₂, vorzugsweise auch mit Schwefeldioxid, reagieren sind prinzipiell möglich. Calciumoxid wäre z.B. möglich. Wasserlöslich wären z.B. auch Aluminate.)

Die Handhabung von Alkali- und Erdalkalimetallhydroxiden oder -oxiden ist gefahrenträchtiger, als die von den Carbonaten und Hydrogencarbonaten, so dass die Carbonate und Hydrogencarbonate als Bestandteile des Mittels zur Stadtluftreinigung bevorzugte Ausführungen der Erfindung darstellen.

Besonders bevorzugt sind Substanzen aus der sehr gut wasserlöslichen Gruppe Natriumcarbonat (Waschsoda", E500i), Kaliumcarbonat ("Pottasche", E501), Natriumhydrogencarbonat ("Backsoda", "Bullrich Salz", E500ii) und Kaliumhydrogencarbonat (Backtriebmittel, ebenfalls E501, wie das Carbonat). Natriumsesquicarbonat ("Badesalz", E500) ist ein Doppelsalz aus Natriumcarbonat und Natriumhydrogencarbonat und wird erfindungsgemäß als "Mischung" von Natriumcarbonat und Natriumhydrogencarbonat betrachtet.

Der Vorteil dieser sehr gut wasserlöslichen Substanzen ist der, dass selbst, wenn die Straßenfläche abtrocknen sollte und die Substanzen als "Feinstaub" aufgewirbelt würden, keine gesundheitliche Wirkung als Feinstaub eintritt, weil sich die Substanzen im Feuchtigkeitsfilm auf den Schleimhäuten sofort auflösen (ähnlich wie Salzpartikel in der Meeresluft, die auch physiologisch nicht als Feinstaub wirksam sind, selbst wenn Messgeräte sie als Partikel zählen).

Für Fälle, in denen Pflanzen besonders geschont werden müssen, sind Kaliumverbindungen bevorzugt. Ansonsten kann nach Marktpreis ausgewählt werden. Es ist auch möglich, Mischungen aus Kalium- und Natriumverbindungen zu verwenden, insbesondere, wenn Tiere geschont werden sollen, die von Natur aus mehr Natrium enthalten als Pflanzen. Es ist dann ein molares Kalium:Natrium-Verhältnis zwischen 1:0,3 und 1:5 bevorzugt.

Was die menschliche Gesundheit betrifft, ist eine Mischung, bei der Natrium und Kalium im gleichen Verhältnis vorkommen, wie im menschlichen Körper, besonders bevorzugt. Hierzu variieren die in der Literatur angegeben Werte leicht, aber das molare Verhältnis Kalium: Natrium beträgt im menschlichen Körper ungefähr 2,6:1 bis 2:1. Die Empfehlung der WHO für das Verhältnis Kalium:Natrium lautet hingegen 1:1.

Das mit sauren Luftbestandteilen chemisch reagierende Mittel, als Lösung oder als Feststoff, wird auf der Straßenoberfläche großflächig verteilt, um eine große reaktive Oberfläche zu erzeugen. Auch die Gehwege können prinzipiell mitbehandelt werden. Vorzugsweise sollen mehr als 2 % der Straßenfläche, über der zu hohe Grenzwerte gemessen werden, von dem Mittel bedeckt sein. Besser noch sind mehr als 10 %, noch besser mehr als 50 %.

Auf diese Weise wird eine größtmögliche Reaktionsfläche erzeugt, über die die Schadstoffe in der Luft mit den Substanzen in dem Mittel reagieren können.

Vor allem hygroskopische Substanzen können auch in fester Form aufgebracht werden, z.B. mittels eines Streuwagens. Sie zerfließen dann auf der Straßenoberfläche durch Aufnahme von Luftfeuchtigkeit von selbst und werden vom fließenden Verkehr unter Oberflächenvergrößerung weiterverteilt. Sie gelangen dann auch an Kfz-Flächen, wo sie ebenfalls wirksam Luftschadstoffe binden können.

Der Auftrag als Lösung ist aber bevorzugt. Er kann mittels Sprengwagen erfolgen, der aber die Lösung vorzugsweise feinverteilter ausstößt als ein üblicher Wasserwagen zum Sprengen von Straßen. Außerdem bringt er weniger Lösung aus als ein üblicher Sprengwagen.

Obwohl das Mittel billig und in den eingesetzten Mengen für die Umwelt und PKWs unschädlicher als z.B. Kochsalz ist, wird vorzugsweise nur so wenig Lösung aufgebracht, dass keine Rinnsale entstehen, die in die Straßenabflüsse abfließen.

Bei langanhaltendem Regen muss die Straße nicht unbedingt behandelt werden, da schon der Regen die Luft sauberer macht, auch wenn das leicht saure Regenwasser nicht chemisch mit den Luftschadstoffen reagiert, sondern die leicht löslichen Luftschadstoffe (z.B. Stickstoffdioxid) nur physikalisch löst.

In der Lösung vorzugsweise enthaltene hygroskopische Stoffe halten die Straßenoberfläche ständig feucht und binden so auch noch Feinstaub. Dies ist daher eine bevorzugte Ausführungsform.

Es wird dadurch verhindert, dass die Grenzwerte in der Luft überschritten werden. Seit Januar 2005 soll im Tagesmittel bei PM₁₀-Partikeln (Partikeln bis 10 Mikrometern aerodynamischem Durchmesser) ein Grenzwert von 40 µg/m³ (Mikrogramm je Kubikmeter) Luft eingehalten werden. Maximal 35 Überschreitungen sind je Kalenderjahr gestattet. Im Jahresdurchschnitt soll ein Wert von 40 µg/m³ Luft nicht überschritten werden. Für Kleinstpartikel PM_{2,5} (Partikel bis 2,5 Mikrometer aerodynamischer Durchmesser) gilt seit 2010 ein Zielwert von 25 µg/m³. Seit 2015 ist dieser als Grenzwert bei der PM_{2,5}-Belastung verbindlich. Ab dem Jahre 2020 sollen die Feinstaub-Grenzwerte für Feinstpartikel auf 20 µg/m³ verringert werden.

Die Weltgesundheitsorganisation gibt weit drastischere Feinstaubgrenzwerte vor:
1. PM₁₀-Grenzwert
   ∘ Jahresmittel = 20 µg/m³
   ∘ Tagesmittel = 50 µg/m³
2. PM_{2,5}-Grenzwert
   ∘ Jahresmittel = 10 µg/m³
   ∘ Tagesmittel = 25 µg/m³

Kaliumcarbonat ist ein von sich aus hygroskopisches Absorbens für saure Gasbestandteile. Es kann auch mit Natriumcarbonat oder Natriumhydrogencarbonat oder Kaliumhydrogencarbonat oder anderen Absorbenzien in Kombination (gemischt) verwendet werden.

1 kg wasserfreies Natriumcarbonat (9,43 Mol oder 18,86 Mol an Natriumionen) ("Waschsoda") oder 1,58 kg (18,86 Mol) wasserfreies Natriumhydrogencarbonat ("Backsoda", "Bullrich Salz") ist z.B. in der Lage, die NOₓ-Menge (als NO₂ gerechnet) des schmutzigsten gemessenen Diesel-PKW von knapp 1000 Milligramm (als NO₂ gerechnet 0,0217 Mol) pro Kilometer über eine Strecke von 870 Kilometern völlig zu binden.

(1 Mol Natriumcarbonat Na₂CO₃ bindet 2 Mol NO₂, jedes Mol Natriumionen eines. 1 Mol Natriumhydrogencarbonat NaHCO₃ bindet nur 1 Mol NO₂. Jedes Mol eines einfach negativ geladenen Hydrogencarbonations oder Hydroxidions reagiert mit einem Mol NO₂. Jedes Mol eines zweifach negativ geladenen Carbonations oder Oxidions reagiert mit 2 Mol NO₂. Es ist daher sinnvoll, die Menge des NO₂, das gebunden werden kann, auf die Molzahl negativer Ladung im Gemisch aus Carbonat oder/und Hydrogencarbonat oder/und Oxid oder/und Hydroxid zu beziehen. Jedes Mol negative Ladung des betreffenden Ions oder Ionengemisches reagiert dann mit einem Mol NO₂. Z.B. wird ein Mol HCO₃⁻ durch ein Mol NO₃⁻ oder NO₂⁻ aus seinen Salzen verdrängt, oder ein Mol CO₃²⁻ durch zwei Mol NO₃⁻ oder NO₂⁻ .(Nitrit und Nitratanionen entstehen durch Reaktion von NO₂ mit Wasser (Disproportionierung).)

In den meisten Fällen und wenn nur Teile des NOₓ aus dem Abgas entfernt werden müssen, um die Luftreinhaltungsgrenzwerte zu unterschreiten, reicht ein Kilogramm Natriumcarbonat oder 1,58 Kilogramm Natriumhydrogencarbonat daher ein Mehrfaches weiter! Zudem ist nicht jedes Fahrzeug ein stark schadstoffemittierendes Dieselfahrzeug!

Vom Kaliumcarbonat und Kaliumhydrogencarbonat, die aufgrund des Elementes Kalium eine etwas höhere Molmasse von 138 Gramm bzw. 100 Gramm aufweisen, wären gewichtsmäßig etwas höhere Mengen für die gleiche Menge an zu bindendem Stickstoffdioxid notwendig, nämlich 1,30 bzw. 1,86 Kilogramm. Eine Straßenoberfläche von 1 Kilometer Länge und etwa 10 Metern Breite, die mit 10 kg (94,3 Mol) Natriumcarbonat (oder 15,8 kg (188,6 Mol) Natriumhydrogencarbonat, oder 13 kg Kaliumcarbonat, oder 18,6 kg Kaliumhydrogencarbonat) behandelt wäre, könnte somit die Stickoxide von 8700 schadstoffintensivsten Dieselfahrzeugen komplett binden, bevor neues Mittel aufgebracht werden müsste.

Das wären bei der angenommenen Fläche von 10.000 Quadratmetern 1 Gramm Natriumcarbonat oder 1,58 Gramm Natriumhydrogencarbonat oder 1,3 Gramm Kaliumcarbonat oder 1,86 Gramm Kaliumhydrogencarbonat pro Quadratmeter. In verallgemeinernder Darstellung sind dies 9,43 Millimol (mmol) Alkalicarbonat oder 18,86 Millimol Alkalihydrogencarbonat pro Quadratmeter.

Noch allgemeiner: 18,86 Millimol pro Quadratmeter an negativer Ladung eines Carbonats oder/und Hydrogencarbonats oder/und Oxids oder/und Hydroxids, welches mit den zuvor genannten sauren Luftbestandteilen reagiert.

Da die meisten Dieselfahrzeuge und die benzinverbrennenden Fahrzeuge deutlich weniger ausstoßen und nur ein Teil der Abgase mit dem Carbonat oder Hydrogencarbonat (oder Oxid oder Hydroxid) reagiert und ein Teil sich zudem in höhere Luftschichten verflüchtigt und dort auch durch Luftströmungen abtransportiert wird, reichen ungefähr 100 Mol eines Carbonats oder 200 Mol eines Hydrogencarbonats pro Tag und befahrenem Kilometer an vielbefahrenen Straßen in der Stadt aus. In der besonders schadstoffbelasteten Saison (vielerorts Dezember bis Februar) wird dann vorzugsweise an aufeinanderfolgenden Tagen die Straße neu mit Lösung oder trockenem Mittel behandelt. Dieser Behandlung kann ein Abwaschen durch einen Sprengwagen vorangehen.

Das Absorbens ist abhängig vom Aufbringmodus und der Jahreszeit in einer Konzentration von 0,1 Gewichts-% bis Löslichkeitsmaximum in der Lösung enthalten oder wird als Feststoff aufgebracht.

Es werden zum Zwecke der Entfernung der beschriebenen sauren Gase aus der Stadtluft im Bedarfsfall oder täglich, notfalls auch mehrfach, mehr als 0,001 Mol an negativer Ladung eines Carbonats oder/und Hydrogencarbonats oder/und Oxids oder/und Hydroxids des chemisch reagierenden Absorbens pro Quadratmeter Straßenfläche aufgebracht. (Das entspricht, wie oben beschrieben, 0,001 Mol eines einfach negativ geladenen Hydrogencarbonations oder und Hydroxidions oder 0,0005 Mol eines zweifach negativen Carbonations oder Oxidions.)

Vorzugsweise werden zwischen 0,002 und 0,5 Mol pro Quadratmeter aufgebracht. Mehr bevorzugt werden zwischen 0,005 Mol pro Quadratmeter und 0,1 Mol pro Quadratmeter aufgebracht. Noch mehr bevorzugt werden zwischen 0,005 Mol und 0,05 Mol pro Quadratmeter aufgebracht, denn dadurch wird die Griffigkeit der Straßenfläche, verglichen mit höheren Konzentrationen, besser. Im Winter, wenn die Griffigkeit aufgrund des achtsameren Fahrens der Autofahrer keine so große Rolle spielt und das Mittel auch gleichzeitig als Auftaumittel verwendet wird, können auch Mengen größer als 0,1 Mol pro Quadratmeter aufgebracht werden.

Die vorgeschlagenen Substanzen reagieren mit den sauren Luftbestandteilen und dem Luftsauerstoff (der die Oxidationsstufe des Stickstoffs in den Stickoxiden erhöht) und Wasser unter Freisetzung von Kohlendioxid bzw. von Wasser zu unschädlichen Produkten: Nitriten und Nitraten, bzw. Sulfiten und Sulfaten. Diese sind ebenfalls wasserlöslich.

Die verwendeten Substanzen haben darüber hinaus den Effekt, im Winter wie das klassische Streusalz den Gefrierpunkt des Wassers herabzusetzen. Streuen mit Streusalz ist dann nicht mehr nötig. Dies entlastet auch das Grundwasser und schont Betonbauwerke, denn das Chlorid im klassischen Streusalz schädigt diese.

Überhaupt ist in armierten Betonbauwerken wie Parkhäusern ein Streuen im Winter mit dem beschriebenen kochsalzfreien Mittel empfehlenswert.

Wenn das chemische Mittel außer zur Schadstoffbindung auch noch als Auftaumittel gegen Eis und Schnee dienen soll, müssen allerdings größere Mengen (siehe hierzu die Anwendung von Kaliumcarbonat in der Stadt Wien zu diesem Zwecke) aufgebracht werden, wobei diese größere Menge und Konzentration dann im Winter aber auch noch effektiver die Luftschadstoffe bindet. Auftaumittel werden üblicherweise, je nach Witterung, in einer Menge von 5 bis 40 Gramm pro Quadratmeter Straßenfläche aufgebracht. Dies wären im Falle von Natriumcarbonat ungefähr 0,05 Mol bis 0,4 Mol.

Eine weitere der vielen möglichen Ausführungsformen der Erfindung sieht daher auch vor, zur Kostenersparnis gegenüber dem absorbierenden Mittel als alleinige Substanz im Winter ein übliches Auftaumittel wie z.B. Streusalz (NaCl) (andere übliche Auftaumittel sind ebenfalls möglich) mit einer anteilsmäßig geringeren Menge an dem weiter oben beschriebenen erfindungsgemäßen Mittel zu versetzen, welches saure Luftbestandteile chemisch bindet. Dieses spezielle, saure Luftschadstoffe bindende Auftaumittelgemisch enthält dann gewichtsmäßig, je nach zum Auftauen benötigter Streumenge, pro Flächeneinheit, 1 bis 40 Gewichts-%, bevorzugt 2,5 bis 20 Gewichts-% an erfindungsgemäßer chemischer Substanz, die saure Luftbestandteile bindet.

Weiterhin sieht eine für den Winter geeignete Ausführung der Erfindung vor, die erfindungsgemäßen, saure Luftbestandteile bindenden chemischen Substanzen an ein mechanisch wirkendes Streumittel wie z.B. Splitt, Sand, Blähton oder Vulkanasche zu binden, so dass sie zusammen mit dem mechanisch wirkenden Streumittel auf die Fahrbahn aufgebracht werden. Von der Fa. Rudolf Klaghofer GmbH, Wien, gibt es z.B. ein umweltfreundliches Winterstreumittel aus mit Kaliumcarbonat ummanteltem Blähton, der erfindungsgemäß auch für den völlig anderen Verwendungszweck der Schadstoffentfernung aus der Stadtluft eingesetzt werden kann.

Das mechanisch wirkende Streumittel und das schadstoffbindende Mittel können aber auch getrennt voneinander aufgebracht werden. Dann ist ein bedarfsgerechtes Dosierungsverhältnis der beiden Mittel einfach möglich.

In Versuchen mit Lösungen von Alkalicarbonaten und Alkalihydrogencarbonaten hat es sich gezeigt, dass vor allem Alkalicarbonate in höheren Dosierungen die Griffigkeit von Straßenflächen herabsetzen können.

Wenn im Bereich von Straßen, auf denen höhere Geschwindigkeiten gefahren werden dürfen (vor allem außerhalb von Städten), höhere Hafterfordernisse notwendig sein sollten, so ist es daher möglich, die erfindungsgemäßen chemischen Substanzen auch in der eisfreien Zeit zusammen mit einem mechanischen Streumittel wie z.B. Blähton oder Splitt aufzubringen.

Um das erfindungsgemäße Mittel hygroskopisch zu machen, kann es ganz aus einem hygroskopischen Absorbens bestehen, wie z.B. Kaliumcarbonat, oder es kann diese hygroskopische Substanz einem anderen nicht hygroskopischem Absorbens, z.B. Natriumcarbonat oder Natriumhydrogencarbonat oder Kaliumhydrogencarbonat, in solcher Menge zugesetzt sein, dass die aufgebrachte Mischung immer noch ständig feucht bleibt. Hierzu sollte der Gewichtsanteil einer hygroskopischen, nicht mit den sauren Gasen reagierenden Substanz 1/10 bis das 10-fache der Menge an reaktiver Substanz betragen, vorzugsweise 1/5 bis das 5-fache. Hygroskopische Mittel sind z.B. Calciumchlorid, Magnesiumchlorid, Glycerin, Triethylenglykol.

Es sind in gleicher Menge auch nichthygroskopische, flüssige, gut wasserlösliche Verbindungen mit hoher Verdampfungstemperatur von mehr als 150°C (z.B. Glykole) verwendbar, die ebenfalls einen dauerhaften feuchten Film auf der Fahrbahn bilden und durch Regen oder Wassersprengwagen abgewaschen werden können. Vorzugsweise werden dann solche Glykole verwendet, wie sie in Nebelfluids in Discotheken eingesetzt werden, denn diese sind als wenig oder nicht gesundheitsgefährdend getestet worden.

Ein ständig feuchter Film auf der Straße führt aufgrund der hohen Wasserlöslichkeit von NO₂, der besseren Diffusion der sauren Luftbestandteile in sein Inneres und der besseren Diffusion der Reaktanden in seinem Inneren und aufgrund der größeren Oberfläche (verglichen mit an der Straße angetrockneten Kriställchen) zu einer schnelleren Reaktion der Carbonationen oder Hydrogencarbonationen mit den sauren Luftbestandteilen.

Prinzipiell kann den erfindungsgemäßen, saure Luftbestandteile bindenden Substanzen z.B. also stark hygroskopisches Calciumchlorid zugesetzt werden, das in den USA z.B. als Streusalz verwendet wird, oder auch Magnesiumchlorid oder das Auftaumittel Calciummagnesiumacetat oder Natriumacetat. Acetate reagieren als Salze einer schwachen Säure darüber hinaus ebenfalls, wenn auch schwächer, mit den sauren Luftbestandteilen NOₓ und SOₓ.

Das erfindungsgemäße Mittel kann also auch ein deutlich höher (bei mehr als 150 °C) als Wasser siedendes, vorzugsweise hygroskopisches, Lösungsmittel enthalten, z.B. Glycerin oder Glykol. Vorzugsweise wird ein solches Gemisch in wässriger Lösung auf die Straße aufgebracht. Der Gehalt an diesem Lösungsmittel beträgt gewichtsmäßig 1/10 bis das 10-fache der Menge an erfindungsgemäßer, saure Luftbestandteile bindender Substanz.

Erfindungsgemäß können die auf die Straßen aufgebrachten Mittel somit ganz allgemein aus Alkalimetallcarbonaten oder/und Alkalimetallhydrogencarbonaten oder/und Alkalimetallhydroxiden oder/und Alkalimetalloxiden oder/und Erdalkalimetallcarbonaten oder/und Erdalkalihydrogencarbonaten oder/und Erdalkalimetallhydroxiden oder/und Erdalkalimetalloxiden oder/und Aluminaten bestehen, die zusätzlich ein flüssigkeitsfilmbildendes schwer verdampfendes leicht wasserlösliches Mittel enthalten können, das vorzugsweise hygroskopisch ist oder einen Siedepunkt von mehr als 150 °C aufweist. Die relativen Bestandteile errechnen sich aus den im Text gegebenen Angaben.

## Patentansprüche

1. Verfahren zur Reinigung von Stadtluft im Bereich einer Straße, **dadurch gekennzeichnet, dass** auf die Straßenoberfläche großflächig ein Absorbens aufgebracht wird, das mit sauren luftverunreinigenden Bestandteilen, die ausgewählt sind aus der Gruppe bestehend aus Stickstoffdioxid oder/und Stickstoffmonoxid oder/und Schwefeldioxid oder/und Schwefeltrioxid chemisch reagiert und diese in unschädlichere Verbindungen überführt.

2. Verfahren zur Reinigung von Stadtluft im Bereich einer Straße nach Anspruch 1, **dadurch gekennzeichnet, dass** das Absorbens in wässriger Lösung aufgebracht wird.

3. Verfahren zur Reinigung von Stadtluft im Bereich einer Straße nach Anspruch 1 oder 2, **dadurch gekennzeichnet, dass** ein hygroskopisches Absorbens aufgebracht wird, das auch Feinstaub bindet und/oder diesen auf der Straßenoberfläche festhält.

4. Verfahren zur Reinigung von Stadtluft im Bereich einer Straße nach einem der Ansprüche 1 bis 3, **dadurch gekennzeichnet, dass** Alkalicarbonate oder/und Alkalihydrogencarbonate oder/und Alkalioxide oder/und Alkalihydroxide oder/und Erdalkalicarbonate oder/und Erdalkalihydrogencarbonate oder/und Erdalkalioxide oder/und Erdalkalihydroxide in wässriger Lösung oder als körnige oder pulverförmige Feststoffe großflächig auf die Straßenfläche aufgebracht werden.

5. Verfahren zur Reinigung von Stadtluft im Bereich einer Straße nach einem der Ansprüche 1 bis 4, **dadurch gekennzeichnet, dass** bei anfallender Belastung durch saure Luftschadstoffe pro Tag und pro Quadratmeter Straßenfläche mehr als 0,001 Mol in Carbonaten oder/und Hydrogencarbonaten oder/und Oxiden oder/und Hydroxiden gebundene negative Ladung aufgebracht wird, vorzugsweise zwischen 0,002 und 0,5 Mol, noch bevorzugter zwischen 0,005 Mol und 0,1 Mol, besonders bevorzugt zwischen 0,005 Mol und 0,05 Mol.

6. Mittel zur Reinigung von Stadtluft im Straßenbereich, die mit Stickoxiden oder/und Schwefeloxiden verunreinigt ist, von wenigstens Teilen dieser Stickoxide oder/und Schwefeloxide, **dadurch gekennzeichnet, dass** es als Absorbens in fester oder gelöster Form Alkalicarbonate oder/und Alkalihydrogencarbonate oder/und Alkalioxide oder/und Alkalihydroxide oder/und Erdalkalicarbonate oder/und Erdalkalihydrogencarbonate oder/und Erdalkalioxide oder/und Erdalkalihydroxide enthält.

7. Mittel nach Anspruch 6, **dadurch gekennzeichnet, dass** es hygroskopische Carbonate oder/und Hydrogencarbonate oder/und andere hygroskopische Verbindungen, insbesondere Calciumchlorid oder Magnesiumchlorid oder/und ein nicht bei Umgebungstemperatur verdampfendes Lösungsmittel, insbesondere Glykol oder Glycerin enthält.

8. Mittel nach einem der Ansprüche 6 oder 7, **dadurch gekennzeichnet, dass** es zusätzlich ein im Winterdienst eingesetztes Auftaumittel für Eis, insbesondere Natriumchlorid oder Calciummagnesiumacetat oder Natriumacetat, enthält.

9. Mittel nach einem der Ansprüche 6 bis 8, **dadurch gekennzeichnet, dass** es zum Zwecke der Aufbringung auf die Straßenfläche als Lösung vorliegt.

10. Mittel nach einem der Ansprüche 6 bis 9, **dadurch gekennzeichnet, dass** es zusätzlich ein mechanisches Streumittel, insbesondere Streusplitt oder Blähton enthält, das die Griffigkeit der Straßenoberfläche erhöht.

11. Verwendung von Alkalicarbonaten oder/und Alkalihydrogencarbonaten oder/und Alkalioxiden oder/und Alkalihydroxiden oder/und Erdalkalicarbonaten oder/und Erdalkalihydrogencarbonaten oder/und Erdalkalioxiden oder/und Erdalkalihydroxiden auf der Straßenoberfläche zur Reinigung von Stadtluft von Stickoxiden oder/und Schwefeloxiden.

12. Verwendung nach Anspruch 11, **dadurch gekennzeichnet, dass** handelsübliches Kaliumcarbonat-haltiges oder/und Kaliumhydrogencarbonat-haltiges Winterstreumittel verwendet wird, nicht nur im Winter, sondern auch zu anderen Jahreszeiten.

13. Verwendung nach einem der Ansprüche 11 oder 12, **dadurch gekennzeichnet, dass** die Verwendung in folgender Menge pro Tag und pro Quadratmeter Straßenfläche erfolgt:
- mehr als 0,001 Mol in Carbonaten oder/und Hydrogencarbonaten oder/und Oxiden oder/und Hydroxiden gebundener negativer Ladung,
- vorzugsweise zwischen 0,002 und 0,5 Mol,
- noch bevorzugter zwischen 0,005 Mol und 0,1 Mol,
- besonders bevorzugt zwischen 0,005 Mol und 0,05 Mol.

14. Verwendung nach einem der Ansprüche 11 bis 13, **dadurch gekennzeichnet, dass** das Mittel auch im Winterdienst gegen Glatteis und Schnee verwendet wird.

15. Verwendung nach einem der Ansprüche 11 bis 14, **dadurch gekennzeichnet, dass** das Mittel zusammen mit hygroskopischen anderen Substanzen oder/und mit schwerer als Wasser flüchtigen Lösungsmitteln wie Glycerin oder Glykol verwendet wird, die die Straßenoberfläche feucht halten und Staub binden bzw. festhalten.
